# EUROPEAN PATENT SPECIFICATION

(11) **EP 3 074 710 B1**
(45) Date of publication and mention of the grant of the patent: **29.04.2020**
(21) Application number: 14865900.6
(22) Date of filing: 28.11.2014
(51) Int. Cl.: F28D 9/04, F28F 3/08, F28D 9/00

(54) **HEAT EXCHANGER**
WÄRMETAUSCHER
ÉCHANGEUR DE CHALEUR

(30) Priority: 29.11.2013 NZ 61846313; 25.08.2014 NZ 62925114
(43) Date of publication of application: 05.10.2016
(73) Proprietor: Cyclotec Limited, Christchurch 8014 (NZ)
(72) Inventor: Hamilton, Phillip Craig, Christchurch 8014 (NZ)
(74) Representative: Hanna Moore + Curley
(86) International application number: PCT/NZ2014/050013
(87) International publication number: WO 2015/080602

(56) References cited:
- EP-A2- 2 614 764
- WO-A1-2006/045153
- CA-A1- 2 775 456
- CN-Y- 201 221 901
- DE-A1- 3 319 638
- DE-A1- 4 406 971
- DE-A1- 19 608 404
- DE-B3-102007 027 316
- US-A- 3 921 713
- US-A- 4 291 423
- US-A- 4 445 569
- US-A1- 2008 060 796

## Description

### Technical Field

The present invention is related to heat exchangers and in particular to heat exchangers for use in bathing showers or systems incorporating a heated liquid output and a colder water input.

### Background Art

Heat exchangers for bathing showers are used to recover some of the heat present in the wastewater draining from the shower. There are significant benefits in recovering heat that would otherwise be lost if the wastewater drains into the storm water or sewerage systems.

A shower heat exchanger is typically used to transfer the heat in the wastewater to incoming water from a cold water source thereby warming the cold water inflow and thus requiring less hot water to be added to reach the temperature desired by the user. A reduction in the water heating requirement results in a commensurate energy savings.

Prior art shower heat exchangers typically fall under one of the following categories:

### Chamber

Chamber-type shower heat exchangers represent the simplest form and include a cold water chamber positioned underneath the shower floor which acts as a heat exchanging surface. The chamber has an inlet from a cold water source and an outlet to the shower head. Chamber heat exchangers are simple and inexpensive but are inefficient as the cold water flow path between the inlet and outlet is not optimised to increase the mutual exposure of the cold and hot water, resulting in inefficient heat transfer across the chamber. Moreover, if the chamber has no internal partitions or struts to support the shower floor, the shower floor may become damaged as users stand on the floor.

### Copper spiral

To address the inefficiency problems of the chamber-type heat exchangers, some prior art heat exchangers incorporate a copper pipe coiled in a two or three dimensional spiral beneath the shower floor. The cold water inlet is connected to one end of the pipe and the other end of the pipe is connected to a further pipe for passing water to the shower head.

In some prior art embodiments the copper spiral is positioned directly below the shower floor such that the warmer wastewater flowing over the shower floor passes heat through the floor and through the copper pipe to the cold water.

In other prior art copper spiral heat exchangers, the copper spiral may be positioned in a wastewater chamber or sump through which the wastewater drains. The warmer wastewater thus transfers heat directly to the cooler copper spiral, thereby improving heat transfer efficiency. Such configurations provide improved efficiency over embodiments transferring heat through the shower floor due to
- minimising the distance (i.e. the thickness of the copper pipe wall) of heat travel
- a potentially greater heat exchanger surface area due to using the entire outer surface of the pipe.

Copper spiral heat exchangers provide reasonable efficiency but can be difficult to clean in the case where there is direct contact with the wastewater.

### Plate

EP2249115 by Ying Lin et al. attempts to address the problems associated with chamber-type and copper spiral heat exchangers by using a plate type heat exchanger composed of upper and lower plates joined together by partitions forming the walls of channels to guide the cold water input. The channels thus function analogously to the copper spirals of the previously-described embodiments but may be inexpensively formed as extruded channels between the upper and lower plates. The upper plate forms the shower floor and heat exchange surface and the partitions provide a robust support for supporting the weight of a person standing on the top plate.

Although plate heat exchangers may be inexpensive and robust, their heat transfer efficiency is constrained due to the heat exchanger surface area being limited to the area of the shower floor.

### Sleeve

A yet further type of prior art shower heat exchanger uses a sleeve or coiled tube wrapped about the shower's wastewater pipe. An example sleeve-type heat exchanger is described in EP0513705 B1 by Linder*.* The heat exchanger described by *Linder* comprises a wastewater pipe with an integrated cold water pipe formed as part of the wastewater pipe. The cold water pipe forms a coil along a portion of the length of the wastewater pipe to maximise the heat exchanger surface.

Sleeve-type heat exchangers are convenient for retrofitting or where it's difficult to locate the heat exchanger beneath a shower floor, e.g. in tiled showers and the like. A sleeve heat exchanger can simply replace a section of the drainpipe.

The potential efficiency of sleeve-type heat exchangers however is compromised as the heat transfer area is limited to the contact area between the wastewater pipe and adjacent coil. Moreover, the wastewater pipes are difficult and often impractical to clean. Sleeve-type heat exchangers are also not particularly beneficial for applications with short drain pipes as the maximum heat transfer is constrained by the length of the wastewater pipe.

CN201221901 by Zhuo discloses a shower tray heat exchanger according to the preamble of claim 1.

It would thus be advantageous to provide a heat exchanger for a shower that is:
- inexpensive;
- robust;
- efficient;
- capable of being retrofitted, and/or
- easy to clean.

It is an object of the present invention to address the foregoing problems or at least to provide the public with a useful choice.

Further aspects and advantages of the present invention will become apparent from the ensuing description which is given by way of example only.

### Disclosure of Invention

According to a first aspect of the present invention there is provided a counter-current shower tray heat exchanger characterized according to claim 1.

In use the heat exchanger is preferably orientated substantially horizontally, with spiral conduits spiralling about a substantially vertical central axis. Preferably, the spiral conduits are mutually parallel.

Reference herein is made to the conduits passing "cold" or "hot" water though it will be appreciated that these terms are relative to each other. It is possible that in portions of the adjacent conduits the temperature may be similar or even the same, though it will be appreciated that heat transfer can only occur if there is a temperature differential.

To aid clarity and avoid prolixity, hereinafter reference will be made to the plumbing system being part of a shower with the heat exchanger being used in transferring heat from the hot wastewater output to a lower temperature cold water input. However, it should be appreciated the present invention may be used in other plumbing systems such as baths, washing sinks, washing machines, dishwashers and any application where warming incoming water is useful. The present invention may also be used as a heat exchanger in many other heat exchange applications, including domestic, commercial or industrial applications. For example, the heat exchanger may be used to transfer heat from wastewater from a dish washing sink in a restaurant kitchen to warm incoming cold water to that sink thereby reducing energy requirements.

The term "plate" with reference to the upper and lower plates should be understood to refer to a layer of material forming the upper and lower boundaries of the heat exchanger. It will however be understood that the plates need not be planar and may, for example be formed in a dome, toroid or bowl configuration.

It should be appreciated that reference to the first conduit being positioned above the second conduit refers to at least a majority portion of the conduits and does not require the entirety of the first conduit be above the entirety of the second conduit. In preferred embodiments for example, portions of the heat exchange layer are joined to the second plate and thus there is effectively no second conduit at those joins.

It should be appreciated that the spiral conduits need not lie in the same plane about their entire diameter and may be three dimensional with outer spirals being lower than inner spirals or vice versa.

The heat exchanger extents are preferably defined as the volume bound between the upper and lower plates and sidewall(s) extending about the lateral periphery of the heat exchanger. The heat exchange layer is preferably a continuous layer extending between the lateral extents of the heat exchanger.

To maximise efficiency, the conduits are preferably formed as spirals such that the hot water output flows about the first conduit spiral in the opposite direction to the cold water input flowing in the adjacent second conduit, thereby providing a counter-current heat exchanger. The first conduit preferably has:
- a first conduit inlet for connecting to a hot water outlet (e.g. shower drain) from which the hot water output (warm wastewater) passes to the heat exchanger, and
- a first conduit outlet for egression of the hot water output (wastewater), e.g. to a sewer pipe.

The first conduit may include baffles for interrupting water flow therein. The baffles may thus slow the water flow to increase the time the warmer water remains in the first conduit and thereby increase the time available for heat transfer.

Alternatively, the first conduit inlet may be integrally formed with the hot water outlet, e.g. where the upper plate forms a shower tray/floor.

The second conduit is for passing the cold water input and preferably has:
- a second conduit inlet for connecting to a cold water source (e.g. mains water supply), and
- a second conduit outlet for connecting to a further conduit or an inlet in the plumbing system, e.g. a shower valve, in-line heater and/or associated plumbing.

Shower trays are typically formed to match the shape and configuration of the shower installation with a correspondingly shaped perimeter surrounding a depression with a drain or shower trap for draining the wastewater. The upper and lower plates of the present invention are shaped to suit the application and are thus predominately square or rectangular. The conduits however are formed as spirals.

In one embodiment, the upper plate forms the shower tray and is preferably formed with a drainage aperture located at a depression forming the first conduit inlet.

In an alternative embodiment, the upper plate may be formed as a dome with the hot water output draining to the plate periphery or a peripheral drain, the first conduit inlet located at or connected to said periphery or peripheral drain.

In one embodiment, the heat exchanger is positioned below a separate shower tray, with the upper plate located beneath or adjacent the shower tray.

The lower plate is preferably shaped to suit the application and thus in most applications is typically a planar surface layer with a perimeter shaped to suit the boundary of the bathing shower cubicle or shower tray.

In a bathing shower application, the second conduit will pass incoming cold water at much higher pressure than the wastewater which typically drains solely under gravity. The cold water is also typically supplied from some form of pressurised system, e.g. a water pump or an elevated water source. The second conduit must therefore by sufficiently robust to withstand the pressure and prevent leakage. It is also important to be able to easily access the first conduit carrying the hot water as soap scum and other detritus accumulates in the first conduit, reducing the effectiveness of heat exchange between conduits and potentially causing blockages.

Thus, the second conduit passing the cold water is formed underneath the upper first conduit so that the upper conduit can be accessed easily and cleaned and the lower conduit can be sealed to carry a high pressure water supply.

The second conduit is preferably formed as a spiral conduit formed between the heat exchange layer and second plate and sealed from the first conduit along its length between the second conduit inlet and second conduit outlet.

The heat exchange layer second side is preferably bonded or integrally formed with the lower plate. Alternatively, portions of the heat exchange layer lower side are adhered or connected to the lower plate while still sealing the second conduit from the first conduit.

In embodiments using plastic components, the lower side of the heat exchange layer may be joined to the lower plate with adhesive or, more preferably, via plastic welding such as induction welding, radio frequency welding, solvent welding, ultrasonic welding or the like.

In another embodiment, the heat exchange layer and lower plate may be integrally formed as part of an extrusion, thus negating the need to otherwise seal the heat exchange layer to the lower plate.

In yet another embodiment, the heat exchange layer may be inserted in a lower plate mould and the lower plate formed by injection moulding plastics into the mould about the heat exchange layer.

It is preferable to minimise the thickness of the heat exchange layer to maximise heat transfer, particularly when using plastics as the heat exchange layer. However, the heat exchange layer also needs to be capable of withstanding high-pressure water flow in the second conduit and in some embodiments, support the upper plate and any persons standing thereon.

The heat exchange layer is preferably formed as one or more plastic or metal layers moulded or pressed to form the corresponding walls of the conduits.

The spiral conduits are preferably formed by creating spiral channels in the heat exchanger layer, preferably by pressing, stamping or moulding.

The heat exchange layer is preferably formed to provide conduit walls extending from the lower plate toward the upper plate and more preferably contacting the upper plate.

The heat exchanger layer is preferably orientated in use to extend non-vertically and non-horizontally between the plates to maximise the heat transfer surface area between the adjacent conduits.

The conduit walls preferably extend non-parallel and non-perpendicular to the adjacent surfaces of the upper and lower plates.

The heat exchange layer is preferably formed with a vertical cross-section in the shape of a series of corrugations, undulations, teeth, serrations, saw-tooth or vertically alternating profiles.

Such conduit wall configurations provide an increased surface area for heat transfer relative to conventional spiral heat exchangers which have walls extending vertically between upper and lower plates.

The upper plate is preferably supported by portions of the heat exchanger layer when assembled.

It is a requirement in some jurisdictions to have a 'double-wall' between wastewater and freshwater sources such that if a leak occurs, the leaking water passes to the space between the walls without contaminating the freshwater source. Therefore, the heat exchanger layer is preferably formed from two sub-layers, joined together to form a void therebetween. The void is preferably at least partially open to atmosphere or a drain to drain the void in case of a leak. Preferably, an opening of the void is at a peripheral edge of the void.

The present invention may thus provide significant advantages over the prior art including providing at least one, and preferably both:
- a high efficiency heat exchanger;
- a heat exchanger with a hot water conduit capable of being easily accessed and cleaned.

### Brief Description of Drawings

Further aspects and advantages of the present invention will become apparent from the following description which is given by way of example only and with reference to the accompanying drawings in which:
- Figure 1: shows an exploded diagram of a shower tray according to a first preferred embodiment of the present invention;
- Figure 2: shows a plan view of a bottom plate of the heat exchanger of figure 1;
- Figure 3: shows a plan view of the heat exchanger of figure 1 without a top plate;
- Figure 4: shows a plan view of the heat exchanger of figure 1;
- Figure 5a: shows a cross-section of the heat exchanger of Figures 1-4 through A-A marked on Figure 4;
- Figure 5b: shows a partial enlargement of Figure 5a;
- Figure 6a: shows a cross-section of a heat exchanger according to a second embodiment;
- Figure 6b: shows a partial enlargement of Figure 6a;
- Figure 7a: shows a cross-section of a heat exchanger according to a third embodiment;
- Figure 7b: shows a partial enlargement of Figure 7a;
- Figure 8a: shows a cross-section of a heat exchanger according to a fourth embodiment;
- Figure 8b: shows a partial enlargement of Figure 8a;

### Best Modes for Carrying out the Invention

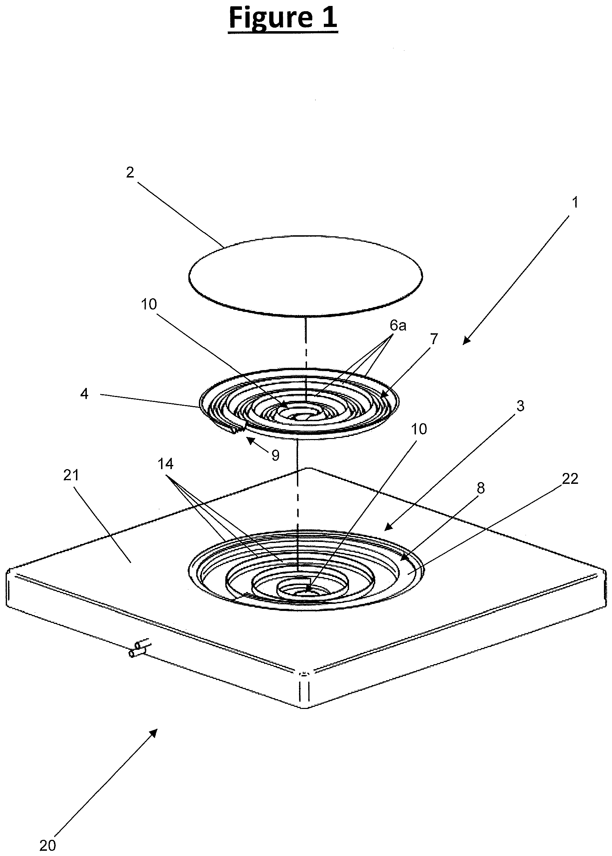

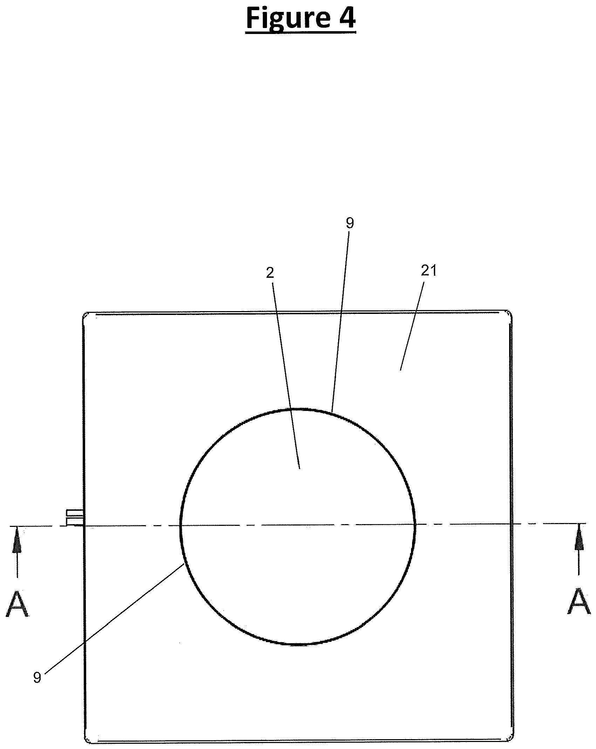

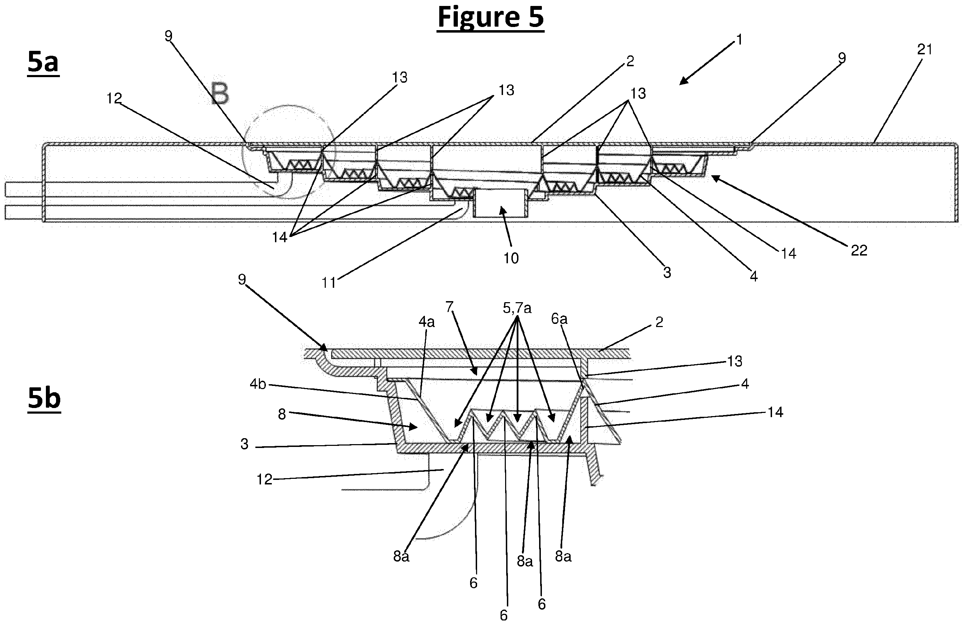

Figures 1-5 show a shower tray (20) incorporating a heat exchanger (1) according to a first embodiment of the present invention.

The heat exchanger (1) is for use in transferring heat from the wastewater hot water output of the shower to the cold water input. The wastewater is warmer than the incoming cold water and thus the heat exchanger (1) can be used to recover heat from the wastewater by transferring the heat to the incoming cold water, thereby reducing the amount of subsequently added hot water or water-heating needed to provide the required temperature at the shower head.

The shower tray (20) includes a base (21) with a depressed central sink forming a lower plate (3) of the heat exchanger (1). The lower plate (3) has an inclined spiral ramp (22) formed with a spiralled vertical support wall (14). An upper top plate (2) is provided as a cover for a heat exchange layer (4) located between the upper (2) and lower (3) plates.

The heat exchange layer (4) is formed from a plate of material that is stamped into shape to provide a corrugated upper side (4a) that is an inclined spiral matching the inclination of the lower plate ramp (22). The corrugated upper side (4a) inclines downward from the outer edge of the heat exchange layer (4) to an inner sump (10). The corrugations (5, 6) form spiralled channels (7a) for the hot water output to flow down. The lower side (4b) of the heat exchange layer (4) is formed with corresponding inclined spiral channels (8b) that are parallel to the upper channels (7a).

The space between the upper side (4a) and upper plate (2) defines a first conduit (7) through which wastewater from a bathing shower (not shown) can flow. The space between the lower side (4b) and lower plate (3) defines a second conduit (8) through which incoming cold water input can flow through to the shower head and/or associated plumbing.

The first conduit (7) is thus located above the second conduit (8) with the heat exchange layer (4) acting as a common boundary between the conduits (7, 8) and through which heat is transferred in use. The first (7) and second (8) conduits are thereby formed as parallel inclined spirals.

In cross-section the heat exchange layer (4) has a triangular wave cross-sectional profile with a series of troughs (5) and ridges (6) corresponding respectively to the first (7a) and second (8a) channels. A larger ridge (6a) is formed to fit over the corresponding support wall (14) of the lower plate (3) and defines the lateral extents of the first (7) and second (8) conduits. The upper plate (2) also has a spiral supporting wall or flange (13) that extends to abut the top of the enlarged ridges (6a) and together with the bottom plate support wall (14) act to provide vertical support for the upper plate (2).

In a bathing shower the second conduit (8) will pass incoming cold water at much higher pressure than the wastewater in the first conduit (7) which typically drains under gravity alone. The cold water is also likely to be supplied from some form of pressurised system, e.g. a water pump or an elevated water source. The second conduit (8) must therefore be sufficiently robust to withstand the pressure and prevent leakage. The lower side (4b) of the heat exchange layer (4) is thus glued, welded or otherwise sealingly joined to the lower plate (3) to seal the second conduit (8) along its length.

In the embodiment shown in figures 1-5 the heat exchange layer (4) is formed from a pressed copper sheet or moulded high density plastic. Where plastic is used the lower side (4b) of the troughs (5) may be plastic welded to the lower plate (3). The support wall (14) is also welded to the lower side of the enlarged ridge (6a). Alternatively, it will be appreciated that using appropriate plastics moulding/extruding techniques the lower plate (3) and heat exchange layer (4) may be integrally formed. In one embodiment, a copper heat exchange layer (4) may be pressed into a plastic moulded lower plate (3).

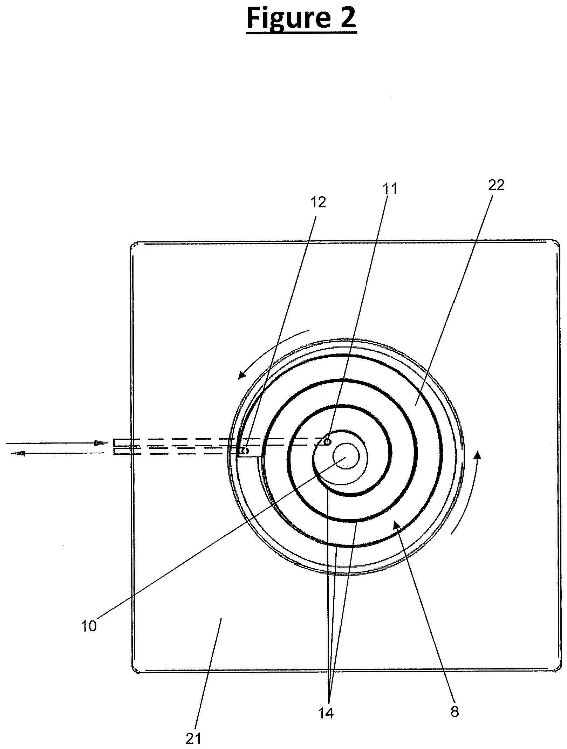

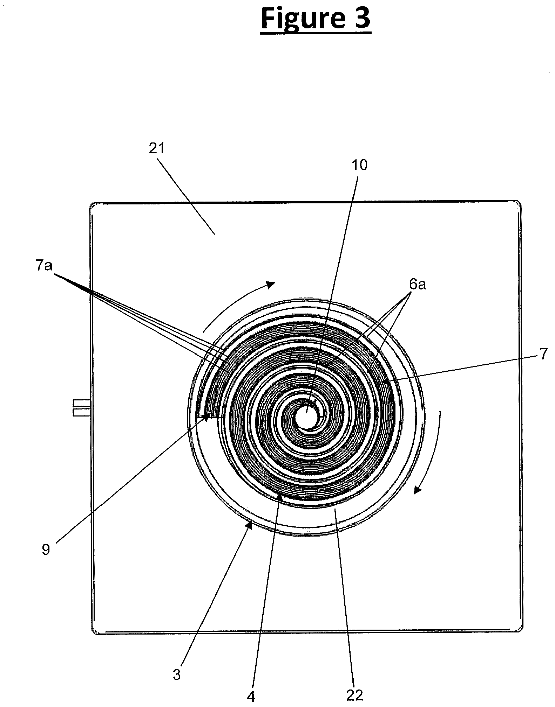

The direction of fluid flow in each conduit (7, 8) is indicated in Figures 2 and 3. Figure 2 shows arrows indicating direction of cold water flow and figure 3 shows arrows indicating the direction of hot water flow.

The first conduit (7) has an inlet (9) at the outer edge of the heat exchanger (1) which also forms the outlet drain for the shower tray of the bathing shower. The warm wastewater is thereby able to flow into the first conduit (7) via the inlet (9) and then through the first conduit (7) to an outlet (10) connected to a wastewater drain (not shown).

The second conduit (8) has an inlet (11) near the center of the lower plate and heat exchange layer (4) and near the first conduit outlet (10). The inlet (11) receives cold water from a cold water source, e.g. mains supply, water tank or similar. The second conduit has an outlet (12) near the outer edge of the heat exchanger (1) which is connected via piping to a shower water-heater or to a shower head mixer where the hot and cold water supplies are mixed.

The counter-current heat exchanger (1) maximises heat transfer effectiveness by increasing the heat differential between conduits at each point about the spiral conduits (7, 8). The spiral shape maximises the overall length of the conduits (7, 8) within the confined area of a bathing shower base.

By providing the heat exchange layer (4) as an intermediate layer between the upper (2) and lower (3) plates increases the surface area for heat exchange relative to a spiral heat exchanger with vertical walls i.e. a heat exchanger without an intermediate heat exchange layer.

In the embodiment shown in Figures 1-5, the heat exchange layer (4) is formed with a triangular wave shaped profile such that for a given channel height (Y) between plates (2, 3), the dimension (F) of the heat exchange layer portion between plates is determined by the equation: F=Y/cos θ
where θ is the inclination of the heat exchange layer (4) extending from the ridge with respect to vertical. Thus, for a 10cm high ridge and a 45 degree inclined portion the length of the inclined heat exchanging portion is approximately 14.1cm. In contrast, if vertical walls were used the heat exchanging portion would equal the spacing between plates i.e. F=Y.

The overall heat exchange area possible is approximately calculated by multiplying the dimension F by the length of each channel (7a) and multiplying by the number of channels (7a).

It will be appreciated that other profiles are possible, including undulations, sine-wave, saw-tooth profiles and the like. In each case, the heat exchanger layer (4) at least partially extends non-vertically and non-horizontally between the plates to maximise the heat transfer surface area between the adjacent conduits.

It will be appreciated that the exchanger (1) could be configured with the second 'cold water' conduit (8) positioned above the first 'hot' water conduit (7). However, this arrangement is not part of the claimed invention, as it would have the disadvantage of precluding or significantly hampering access to the first conduit (7) for cleaning. The second conduit (8) is connected to the high-pressure cold water supply and thus lifting to access a lower first conduit would require disconnection, flexible piping or other complex arrangement to enable practical access. Thus, by locating the first conduit (7) above the second conduit (8) the heat exchanger (1) can offer easy access to the first conduit (7) for cleaning simply by lifting off the top plate (2).

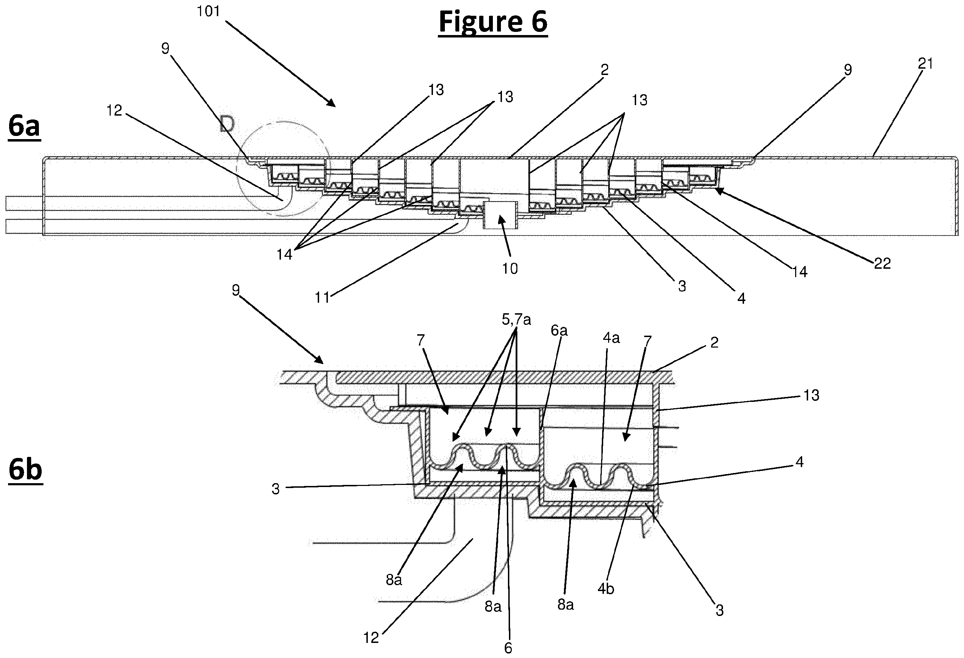

A heat exchanger (101) according to a second embodiment is shown in Figure 6 and is generally similar to the heat exchanger (1) with an inclined spiral conduit arrangement and thus only the differences will be explained herein. Features that are common to both embodiments have the same reference numerals.

Firstly, the heat exchanger (101) differs from the first embodiment (1) in that the heat exchange layer (4) and lower plate (3) are integrally formed as an extruded aluminium coil. The heat exchanger (101) thus offers an advantage over the first embodiment in that there is no need to glue, weld or otherwise seal the lower side (4b) of the heat exchange layer (4) to the lower plate (3) as they are integrally formed.

Secondly, the heat exchanger (101) has a curved corrugated cross-sectional profile for the heat exchange layer (4) and support wall (14) is integrally formed as part of the extrusion. The heat exchanger (101) may alternatively or in addition undergo a metal drawing process to form the correct shape and curve in the heat exchange layer (4) and lower plate (3).

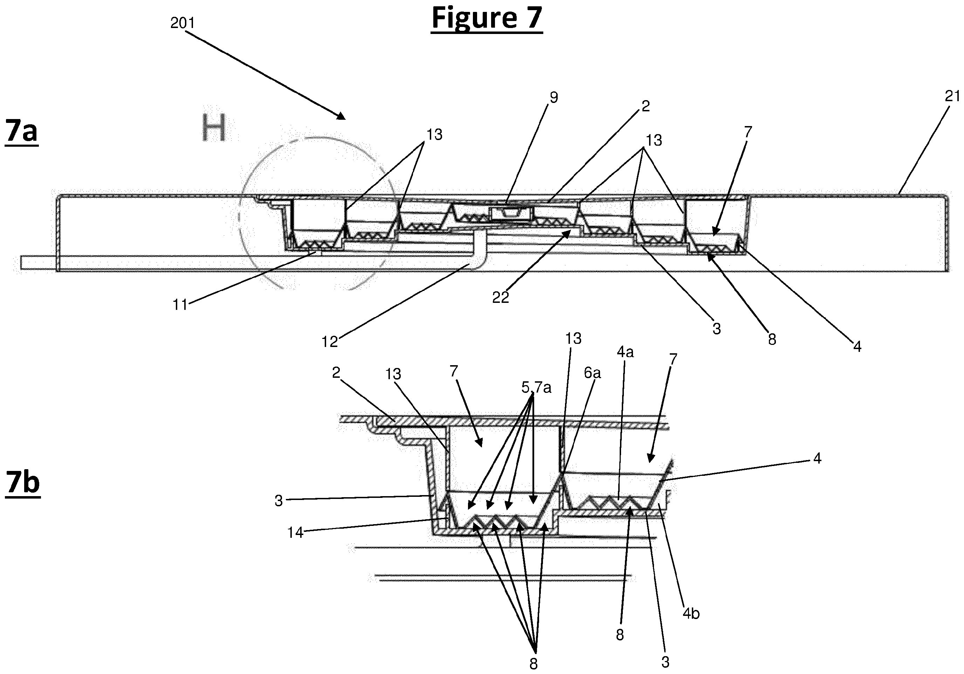

A heat exchanger (201) according to a third embodiment is shown in Figure 7 and is generally similar to the heat exchanger (1) with an inclined spiral conduit arrangement and thus only the differences will be explained herein. Features that are common to both embodiments have the same reference numerals.

The heat exchanger (201) has the same configuration as the first embodiment (1) but the conduit inlets and outlets have opposite positions, i.e. the wastewater drains to a first conduit inlet (9) at the center of the heat exchanger (1) and down the heat exchange layer (4) to a wastewater drain at a periphery of the heat exchanger (1). Similarly, the second conduit inlet (11) is located at the periphery and the input cold water flows to a second conduit outlet (12) at the center.

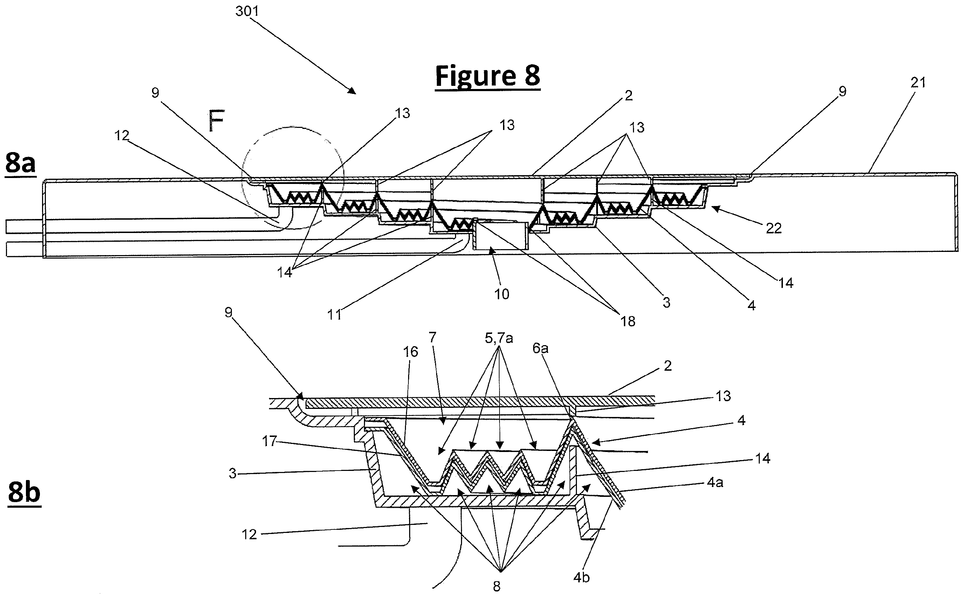

A fourth embodiment is shown in Figure 8 of a heat exchanger (301) generally similar to the heat exchanger (1) with an inclined spiral conduit arrangement and thus only the differences will be explained herein. Features that are common to both embodiments have the same reference numerals.

The heat exchanger (301) utilises a double-walled heat exchange layer (4) formed from upper (16) and lower (17) sub-layers. It is a requirement in some jurisdictions to have a 'double-wall' between wastewater and freshwater sources such that if a leak occurs the leaking fluid passes to the void between the walls and not to the freshwater source. The heat exchanger (200) thus meets this requirement by having a double-wall heat exchange layer (4) formed from two sub-layers (16, 17), joined together to form a void (18) therebetween. The void (18) is open at drainage apertures (19) adjacent the wastewater first conduit outlet (10) to drain to drain the void (18) in case of a leak.

Aspects of the present invention have been described by way of example only and it should be appreciated that modifications and additions may be made thereto without departing from the scope of the claims.

## Claims

1. A counter-current shower tray heat exchanger (1), the heat exchanger (1) configured to transfer heat from a hot water output of a shower to a cold water input of the shower, the heat exchanger (1) including:
- a lower plate (3);
- a heat exchange layer (4) having upper (4a) and lower (4b) sides;
- a first conduit (7) for passage of the hot water output;
a second conduit (8) for passage of the cold water input, the second conduit (8) formed between the lower side (4b) of the heat exchange layer (4) and the lower plate (3);
the first (7) and second (8) conduits are formed as spiral channels in the heat exchange layer (4), said heat exchange layer (4) forming a boundary between the first (7) and second (8) conduits such that the first (7) conduit is positioned above the second (8) conduit, the heat exchange layer (4) connected to the lower plate (3) via a sealed connection to form the second conduit (8) therebetween and such that the hot water output flows about the first conduit (7) in the opposite direction to the cold water input flowing in the adjacent second conduit (8)
**characterised in that** the heat exchanger includes an upper plate (2), the heat exchange layer (4) being positioned between the upper (2) and lower (3) plates, the first conduit (7) formed between the upper side (4a) of the heat exchange layer (4) and the upper plate (2), and a first conduit outlet (10) is located at or adjacent the center of the spiral conduits (7, 8) and the upper plate (2) is removable to provide access to the first conduit (7) for cleaning.

2. A heat exchanger (1) as claimed in claim 1, wherein the first conduit (7) includes:
- a first conduit inlet (9) for connecting to a hot water outlet from which the hot water output passes to the heat exchanger (1), and
- the first conduit outlet (10) for egression of the hot water output.

3. A heat exchanger (1) as claimed in claim 2, wherein the first conduit inlet (9) is higher than the first conduit outlet (10).

4. A heat exchanger (1) as claimed in any one of claims 2-3, wherein the first conduit inlet (9) is located at or adjacent a peripheral portion of the spiral conduits (7, 8).

5. A heat exchanger (1) as claimed in any one of the preceding claims, wherein the lower plate (3) is formed as an inclined spiral ramp (22).

6. A heat exchanger (1) as claimed in any one of the preceding claims, wherein the heat exchange layer lower side (4b) is integrally formed with the lower plate (3).

7. A heat exchanger (1) as claimed in claim 6, wherein the heat exchange layer (4) is integrally formed with the lower plate (3).

8. A heat exchanger as claimed in any one of the preceding claims, wherein walls between the conduits (7, 8) extend non-parallel and non-perpendicular to the adjacent surfaces of the upper (2) and lower (3) plates.

9. A heat exchanger (1) as claimed in any one of the preceding claims, wherein the heat exchange layer (4) is formed with a vertical cross-section in the shape of a series of corrugations, undulations, teeth, serrations, saw-tooth or vertically alternating profiles.

## Patentansprüche

1. Gegenstrom-Wärmetauscher (1) für Duschwannen, wobei der Wärmetauscher (1) konfiguriert ist, um Wärme von einer Heißwasserausgabe einer Dusche auf eine Kaltwassereingabe der Dusche zu übertragen, wobei der Wärmetauscher Folgendes umfasst:
- eine untere Platte (3);
- eine Wärmeaustauschschicht (4), die obere (4a) und untere (4b) Seiten aufweist;
- eine erste Leitung (7) für den Durchgang der Heißwasserausgabe;
- eine zweite Leitung (8) für den Durchgang der Kaltwassereingabe, wobei die zweite Leitung (8) zwischen der unteren Seite (4b) der Wärmeaustauschschicht (4) und der unteren Platte (3) gebildet ist;
wobei die ersten (7) und zweiten (8) Leitungen als Spiralkanäle in der Wärmeaustauschschicht (4) gebildet sind, wobei die Wärmeaustauschschicht (4) eine Grenze zwischen den ersten (7) und zweiten (8) Leitungen bildet, so dass die erste (7) Leitung oberhalb der zweiten (8) Leitung positioniert ist, wobei die Wärmeaustauschschicht (4) mit der unteren Platte (3) über eine dichte Verbindung verbunden ist, um die zweite Leitung (8) dazwischen zu bilden, und so dass die Heißwasserausgabe um die erste Leitung (7) herum in der entgegengesetzten Richtung zu der Kaltwassereingabe fließt, die in der angrenzenden zweiten Leitung (8) fließt,
**dadurch gekennzeichnet, dass** der Wärmetauscher eine obere Platte (2) umfasst, wobei die Wärmeaustauschplatte (4) zwischen den oberen (2) und unteren (3) Platten positioniert ist, wobei die erste Leitung (7) zwischen der oberen Seite (4a) der Wärmeaustauschschicht (4) und der oberen Platte (2) gebildet ist, und sich ein erster Leitungsauslass (10) an oder angrenzend an die Mitte der Spiralleitungen (7, 8) befindet und die obere Platte (2) abnehmbar ist, um zum Reinigen Zugriff auf die erste Leitung (7) zu geben.

2. Wärmetauscher (1) nach Anspruch 1, wobei die erste Leitung (7) Folgendes umfasst:
- einen ersten Leitungseinlass (9) zum Anschluss an einen Heißwasserauslass, aus dem die Heißwasserausgabe zu dem Wärmetauscher (1) geht, und
- den ersten Leitungsauslass (10) für den Austritt der Heißwasserausgabe.

3. Wärmetauscher (1) nach Anspruch 2, wobei der erste Leitungseinlass (9) höher liegt als der erste Leitungsauslass (10).

4. Wärmetauscher (1) nach einem der Ansprüche 2 bis 3, wobei sich der erste Leitungseinlass (9) an oder angrenzend an einen Peripherieabschnitt der Spiralleitungen (7, 8) befindet.

5. Wärmetauscher (1) nach einem der vorhergehenden Ansprüche, wobei die untere Platte (3) als eine geneigte spiralförmige Rampe (22) gebildet ist.

6. Wärmetauscher (1) nach einem der vorhergehenden Ansprüche, wobei die untere Seite (4b) der Wärmeaustauschschicht mit der unteren Platte (3) einstückig gebildet ist.

7. Wärmetauscher (1) nach Anspruch 6, wobei die Wärmeaustauschschicht (4) mit der unteren Platte (3) einstückig gebildet ist.

8. Wärmetauscher nach einem der vorhergehenden Ansprüche, wobei sich die Wände zwischen den Leitungen (7, 8) zu den angrenzenden Oberflächen der oberen (2) und unteren (3) Platten nicht parallel und nicht rechtwinklig erstrecken.

9. Wärmetauscher (1) nach einem der vorhergehenden Ansprüche, wobei die Wärmeaustauschschicht (4) mit einem senkrechten Querschnitt in der Form einer Reihe von Riffelungen, Wellungen, Zähnen, Verzahnungen oder senkrecht abwechselnden Profilen gebildet ist.

## Revendications

1. Échangeur de chaleur de bac à douche à contre-courant (1), l'échangeur de chaleur (1) étant configuré pour transférer la chaleur d'une sortie d'eau chaude d'une douche à une entrée d'eau froide de la douche, l'échangeur de chaleur (1) comprenant :
- une plaque inférieure (3) ;
- une couche d'échange de chaleur (4) présentant des côtés supérieur (4a) et inférieur (4b) ;
- un premier conduit (7) pour le passage de la sortie d'eau chaude ;
un second conduit (8) pour le passage de l'entrée d'eau froide, le second conduit (8) formé entre le côté inférieur (4b) de la couche d'échange de chaleur (4) et la plaque inférieure (3) ;
les premier (7) et second (8) conduits sont formés comme des canaux en spirale dans la couche d'échange de chaleur (4), ladite couche d'échange de chaleur (4) formant une frontière entre les premier (7) et second (8) conduits de sorte que le premier (7) conduit soit positionné au-dessus du second (8) conduit, la couche d'échange de chaleur (4) reliée à la plaque inférieure (3) par l'intermédiaire d'une liaison étanche pour former le second conduit (8) entre eux et de sorte que la sortie d'eau chaude s'écoule autour du premier conduit (7) dans la direction opposée à l'entrée d'eau froide s'écoulant dans le second conduit adjacent (8)
**caractérisé en ce que** l'échangeur de chaleur comprend une plaque supérieure (2), la couche d'échange de chaleur (4) étant positionnée entre les plaques supérieure (2) et inférieure (3), le premier conduit (7) formé entre le côté supérieur (4a) de la couche d'échange de chaleur (4) et de la plaque supérieure (2), et une première sortie de conduit (10) est située au centre ou adjacente au centre des conduits en spirale (7, 8) et la plaque supérieure (2) est amovible pour donner accès au premier conduit (7) pour le nettoyage.

2. Échangeur de chaleur (1) selon la revendication 1, dans lequel le premier conduit (7) comprend :
- une sortie de premier conduit (9) pour le raccordement à une sortie d'eau chaude à partir de laquelle la sortie d'eau chaude passe vers l'échangeur de chaleur (1), et
- la sortie du premier conduit (10) pour l'évacuation de la sortie d'eau chaude.

3. Échangeur de chaleur (1) selon la revendication 2, dans lequel l'entrée du premier conduit (9) est plus haute que la sortie du premier conduit (10).

4. Échangeur de chaleur (1) selon l'une quelconque des revendications 2 à 3, dans lequel l'entrée du premier conduit (9) est située au niveau d'une partie périphérique des conduits en spirale (7, 8) ou adjacente à celle-ci.

5. Échangeur de chaleur (1) selon l'une quelconque des revendications précédentes, dans lequel la plaque inférieure (3) est formée comme une rampe en spirale inclinée (22).

6. Échangeur de chaleur (1) selon l'une quelconque des revendications précédentes, dans lequel le côté inférieur de la couche d'échange de chaleur (4b) est formé d'un seul tenant avec la plaque inférieure (3).

7. Échangeur de chaleur (1) selon la revendication 6, dans lequel la couche d'échange de chaleur (4) est formée d'un seul tenant avec la plaque inférieure (3).

8. Échangeur de chaleur selon l'une quelconque des revendications précédentes, dans lequel les parois entre les conduits (7, 8) s'étendent de manière non parallèle et non perpendiculaire aux surfaces adjacentes des plaques supérieure (2) et inférieure (3).

9. Échangeur de chaleur (1) selon l'une quelconque des revendications précédentes, dans lequel la couche d'échange de chaleur (4) est formée avec une section verticale sous la forme d'une série de cannelures, d'ondulations, de dents, de dentelures, de dents de scie ou de profils alternant verticalement.
